# EUROPÄISCHE PATENTSCHRIFT

(11) **EP 2 703 679 B1**
(45) Veröffentlichungstag und Bekanntmachung des Hinweises auf die Patenterteilung: **01.07.2015**
(21) Anmeldenummer: 13004068.6
(22) Anmeldetag: 16.08.2013
(51) Int. Cl.: F16D 41/26, F16D 41/36, F16D 27/01

(54) **Nabe für wenigstens teilweise muskelbetriebene Fahrzeuge**
Hub for at least partially muscle operated vehicles
Moyeu pour des véhicules au moins partiellement entraînés par la force musculaire

(30) Priorität: 28.08.2012 DE 102012016949
(43) Veröffentlichungstag der Anmeldung: 05.03.2014
(73) Patentinhaber: DT Swiss AG, 2504 Biel (CH)
(72) Erfinder: Walthert, Martin, CH-3270 Aarberg (CH); Spahr, Stefan, CH-2543 Lengnau (CH)
(74) Vertreter: BSB Intellectual Property Law

(56) Entgegenhaltungen:
- EP-A1- 2 422 996
- US-A1- 2009 255 774

## Beschreibung

Die vorliegende Erfindung betrifft eine Nabe für wenigstens teilweise muskelbetriebene Fahrzeuge und insbesondere für Zweiräder. Eine solche Nabe umfasst eine feststehende Nabenachse, einen relativ dazu drehbaren Nabenkörper, eine rotierbare Antriebseinrichtung und einen Zahnscheibenfreilauf. Die Antriebseinrichtung kann beispielsweise als Rotor ausgeführt sein, an dem wenigstens ein Ritzel oder aber ein Ritzelsatz montiert werden kann, um das Antriebsdrehmoment über die Antriebseinrichtung auf den Nabenkörper zu übertragen. Gegebenenfalls kann die Antriebseinrichtung auch einstückig mit einem Ritzel oder einem Ritzelsatz ausgeführt sein.

Mit der DE 20 2011 108 822 U1 ist ein Nabenaufbau bekannt geworden, bei dem an Stelle von Axialverzahnungen eine ringförmigen Antriebskomponente und eine passive Komponente vorgesehen sind. Dabei ist an der ringförmigen Antriebskomponente eine kegelförmige erste Ratsche gebildet, die mit zwei dreieckigen Berührungsflächen versehen ist, die eine kegelförmige Fläche in radialer Richtung bilden. Die passive Komponente ist mit einer kegelförmigen zweiten Ratsche versehen gebildet. Durch die kegelartige Form der Ratschen soll die Reibung bei der Axialverschiebung verringert werden. Um die passive Komponente und die Antriebskomponente miteinander in Eingriff vorzubelasten, können zwei Paare von ringförmigen Magneten vorgesehen, wobei sich die Magnetringe eines Paares jeweils abstoßen und so die passive Komponente und die Antriebskomponente aufeinander zu drücken. Alternativ dazu können Spiralfedern vorgesehen sein, um die Antriebskomponente und die passive Komponente aufeinander zu zu drücken. Nachteilig an der Nabe ist, dass der Nabenaufbau mit den Magnetringen relativ schwer ist. Mit Spiralfedern ist ein geringeres Gewicht möglich. Durch die kegelförmigen Ratschen kann gegebenenfalls die Reibung bei der Axialverschiebung reduziert werden, aber dadurch wird auch die Eingriffsfläche reduziert, wenn sich die Antriebskomponente und die passive Komponente schon ein wenig voneinander entfernen. Dadurch kann das Ansprechverhalten je nach Kraftverhältnissen schwierig werden oder nicht ausreichen. Bei erhöhter Vorbelastungskraft steigt aber wiederum die Reibung im Freilaufzustand an. Es ist mit dieser Konstruktion zwar möglich, dass die Reibung am Außendurchmesser verringert werden kann. Das erfordert aber eine genaue Führung und erhöht somit die Reibung am Innendurchmesser, um eine Betriebssichere Lösung zu ermöglichen.

Mit der EP 2 422 996 A1 ist eine Hinterradnabe für ein Fahrrad bekannt geworden, bei welcher ein Freilauf zwischen dem Rotor und dem Nabengehäuse vorgesehen ist. Der Freilauf umfasst eine Axialverzahnung an dem Rotor und eine axial bewegliche und drehfest in dem Nabengehäuse aufgenommene Zahnscheibe mit einer Axialverzahnung, welche durch zwei ringförmige Permanentmagnete in Eingriffsstellung mit der Axialverzahnung an dem Rotor vorbelastet wird. Gemäß der EP 2 422 996 A1 ist ein Vorteil einer solchen Konstruktion die Wartungsfreiheit. Unabhängig von mechanischen Eigenschaften wird durch die magnetische Vorbelastungseinrichtung jederzeit eine reproduzierbare Kraft auf die bewegliche Zahnscheibe ausgeübt. Ein prinzipieller Nachteil der der EP 2 422 996 A1 ist allerdings, dass die Stärke des magnetischen Feldes und somit die Kraft auf die bewegliche Zahnscheibe mit dem Abstand zwischen den beiden Permanentmagneten abnimmt. In der Freilaufstellung sind die beiden Permanentmagnete besonders nah zueinander angeordnet, sodass eine relativ große Kraft die Zahnscheibe in die Eingriffsstellung drückt. Das führt zu einem schnellen Ansprechverhalten, hat aber auch den Nachteil, dass eine erhöhte Reibung im Freilaufzustand auftritt. Außerdem entsteht noch einer erhöhte Geräuschbildung, wenn die Axialverzahnungen im Freilaufzustand aufeinander gleiten. Im Eingriffszustand ist die wirkende Vorbelastungskraft hingegen erheblich geringer, da der Abstand der beiden Permanentmagneten erheblich größer ist. Das kann nachteilig für die Reaktionsfähigkeit des Freilaufes in oder nahe dem Eingriffszustand sein, insbesondere dann, wenn sich die Axialverzahnung der Zahnscheibe gerade noch nicht im Eingriff mit der Axialverzahnung an dem Rotor befindet.

Aus der US 2009/255774 A1 ist eine Nabe mit einem Freilauf bekannt geworden, wobei ein Zahnring mit einer Axialverzahnung durch magnetische Anziehungskräfte in eine Eingriffstellung mit einer Axialverzahnung an dem Rotor gezogen wird. Die magnetischen Anziehungskräfte müssen relativ groß gewählt werden, damit in dem Freilaufzustand, wenn die Axialverzahnungen den größten Abstand haben, noch eine ausreichende Vorbelastungskraft wirkt, um eine ausreichendes Ansprechverhalten zu gewährleisten.

Mit der EP 2 422 996 A1 ist eine Nabe mit einem Freilauf bekannt geworden, bei dem an einem Kopplungsring ein erster ringförmiger Permanentmagnet vorgesehen ist. Ein zweiter ringförmiger Permanentmagnet ist so in dem Nabengehäuse angeordnet, dass sich die beiden ringförmigen Permanentmagnete voneinander abstoßen und somit den Kopplungsring mit einer Axialverzahnung in Eingriff mit einer Axialverzahnung an dem Rotor vorbelasten. Nachteilig daran ist, dass die ringförmigen Permanentmagnete relativ schwer sind. Außerdem müssen die Permanentmagnete relativ große Magnetkräfte aufweisen, damit auch in dem Eingriffszustand, wenn die beiden Permanentmagnete den größten Abstand voneinander aufweisen, eine ausreichend große Eingriffskraft anliegt, um eine sichere Kraftübertragung zu gewährleisten.

Es ist deshalb die Aufgabe der vorliegenden Erfindung, eine Nabe für wenigstens teilweise muskelbetriebene Fahrzeuge wie beispielsweise Zweiräder und Fahrräder zur Verfügung zu stellen, bei welcher die Freilaufeinrichtung über eine magnetische Vorbelastungseinrichtung verfügt und wobei die Freilaufeinrichtung ein geringes Gewicht und günstige Freilaufeigenschaften aufweist.

Diese Aufgabe wird gelöst durch eine Nabe mit den Merkmalen des Anspruchs 1. Bevorzugte Weiterbildungen der Erfindung sind Gegenstand der Unteransprüche. Weiter Vorteile und Merkmale der vorliegenden Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Zweiräder oder Fahrräder vorgesehen und verfügt über eine Nabenachse, einen Nabenkörper, eine rotierbare Antriebseinrichtung und eine Freilaufeinrichtung. Die Freilaufeinrichtung weist eine erste Eingriffskomponente und eine zweite Eingriffskomponente auf, die miteinander zusammenwirken. Beide Eingriffskomponenten weisen jeweils wenigstens eine Axialverzahnung auf. Die Freilaufeinrichtung und insbesondere die Eingriffskomponenten werden über eine magnetische Vorbelastungseinrichtung in eine Eingriffsstellung vorbelastet. Dabei ist eine erste Magneteinrichtung vorgesehen, die die erste Eingriffkomponente in die Eingriffsstellung vorbelastet und es ist eine zweite Magneteinrichtung vorgesehen, die die zweite Eingriffskomponente in die Eingriffsstellung vorbelastet.

Die erfindungsgemäße Nabe hat viele Vorteile. Die erfindungsgemäße Nabe ermöglicht einen zuverlässigen Betrieb. Dadurch, dass die beiden Eingriffskomponenten durch jeweils wenigstens eine Magneteinrichtung in die Eingriffsstellung vorbelastet und aufeinander zu gedrückt werden, können deutlich günstigere mechanische und auch akustische Eigenschaften erzielt werden. Der Hub, um die Freilaufeinrichtung aus einer Eingriffsstellung in eine Freilaufstellung zu überführen, kann grundsätzlich so groß oder auch größer gewählt werden, wie es im Stand der Technik der Fall ist. Im Unterschied zum Stand der Technik teilt sich bei der erfindungsgemäßen Nabe der zu überwindende Hub aber auf die zwei Magneteinrichtungen auf, sodass der zu überwindende Abstandsunterschied bei einer Magneteinrichtung nur etwa halb so groß wie im Stand der Technik ist.

Das wiederum führt dazu, dass die Kraftunterschiede der Vorbelastungseinrichtung zwischen der Eingriffsstellung und der Freilaufstellung erheblich geringer sind. Dadurch kann einerseits in der Freilaufstellung eine hohe Reaktionsgeschwindigkeit ermöglicht werden, während in der Eingriffsstellung eine immer noch ausreichend hohe Anpresskraft aufgebracht wird, die zu einem entsprechend guten Ansprechverhalten der erfindungsgemäßen Nabe führt.

Es kann dabei sogar die insgesamt wirkende Anpresskraft der Vorbelastungseinrichtung in der Eingriffsstellung größer als im angeführten Stand gewählt werden, während in der Freilaufstellung die insgesamt wirkende Anpresskraft kleiner oder gleich der Anpresskraft der bekannten Nabe ist. Im Stand der Technik muss die Anpresskraft der magnetischen Vorspanneinrichtung in der Freilaufstellung so groß gewählt werden, dass auch in der oder nahe der Eingriffsstellung noch eine genügend große Anpresskraft bzw. Vorspannkraft wirkt. Bei der vorliegenden Erfindung können die Vorspannkräfte in der Eingriffsstellung und der Freilaufstellung besser abgestimmt werden, sodass in allen Fällen und Stellungen der Eingriffskomponenten geeignetere oder auch bessere Bedingungen vorliegen.

Obwohl eine magnetische Vorbelastungseinrichtung zum Vorbelasten der Freilaufeinrichtung in die Eingriffsstellung eingesetzt wird, können sowohl in der Freilaufstellung als auch in der Eingriffsstellung günstige und besser anpassbare Eigenschaften eingestellt werden.

Möglich und bevorzugt ist es auch, dass wenigstens eine Eingriffskomponente an sich wenigstens teilweise magnetisch ist, sodass die Eingriffskomponente wenigstens teilweise durch die erste oder zweite Magneteinrichtung gebildet wird. Dann ist nur eine separate Magneteinrichtung für wenigstens eine Eingriffskomponente nötig.

Ein erheblicher Vorteil von magnetischen Vorbelastungseinrichtungen ist, dass weniger Verschleiß auftritt. Auch die bewegte Masse kann reduziert werden, wodurch eine bessere Dynamik entsteht.

Erfindungsgemäß umfassen sowohl die erste Magneteinrichtung als auch die zweite Magneteinrichtung jeweils zwei sich abstoßende Magnetkomponenten. Durch solche Magneteinrichtungen kann ein einfacher Aufbau und eine zuverlässige Funktion gewährleistet werden. Da im Betrieb der Abstand zwischen den sich abstoßende Magnetkomponenten einer Magneteinrichtung sich vorzugsweise nur um den halben insgesamt vorliegenden Hub ändert, bleiben die sich abstoßenden Magnetkräfte vergleichbarer, als wenn sich der Abstand zwischen zwei sich abstoßenden Magnetkomponenten nochmals verdoppeln würde. Die sich abstoßenden Magnetkräfte nehmen nichtlinear mit dem Abstand voneinander ab. Der genaue Verlauf hängt von der Geometrie und den eingesetzten Materialien auch der weiteren Teile ab. Der Verlauf kann in manchen Fällen von einer Funktion abhängen, bei der sich der Abstand etwa oder näherungsweise quadratisch auf das Funktionsergebnis auswirkt. Bei einer solchen Funktion muss bei einer Verdopplung des Abstandes die vierfache Grundkraft zur Verfügung gestellt werden. Deshalb bleibt die wirksame Kraft konstanter, wenn ein nicht so großer Hub überwunden werden muss. Der Unterschied zwischen einer axialen Kraft im Freilaufbetrieb zu einer axialen Kraft bzw. Grundkraft im Eingriffszustand ist geringer - dies erlaubt eine geringere Kraft und somit weniger

Reibung und einen besseren und zuverlässigeren Eingriff im Eingriffszustand.

Vorzugsweise umfasst eine Magnetkomponente einen Magnetring oder dergleichen. Ein solcher Magnetring besteht wenigstens teilweise aus einem Permanentmagneten oder umfasst wenigstens einen solchen. Ein umlaufender Magnetring bietet den Vorteil, dass unabhängig von der Winkelstellung der Eingriffskomponenten der Freilaufeinrichtung zueinander das Magnetfeld des Magnetringes an jeder Winkelposition wirkt.

Vorzugsweise umfasst eine Magnetkomponente einen Magnetring und eine andere Magnetkomponente weist einzelne Permanentmagnete oder dergleichen auf, die auf dem Umfang angeordnet oder verteilt sind. Bei einer solchen asymmetrischen Lösung kann die wirkende Kraft unabhängig von der Winkelstellung sein, da der gegenüberliegende Magnetring ein über den Umfangswinkel konstantes Magnetfeld erzeugt.

Dadurch kann noch einmal Gewicht eingespart werden, da nur eine solche Anzahl an einzelnen Permanentmagneten vorgesehen oder angeordnet wird, wie nötig ist. Die Anzahl kann sich nach dem Einsatzzweck richten und kann sogar im Betrieb getauscht werden.

Wenn eine Magnetkomponente einen Magnetring bzw. eine gemeinsame Magnetringeinrichtung aufweist und die andere Magnetkomponente mehrere einzelne Magneteinheiten oder Permanentmagnete, kann die wirkende Kraft besonders flexibel eingestellt und Gewicht eingespart werden. Außerdem bleibt durch den Magnetring bedingt, die wirkende Kraft unabhängig von der relativen Winkelposition zueinander immer gleich.

Eine Magneteinheit kann als Permanentmagnet ausgebildet sein, der z. B. eine zylindrische Form aufweist. Möglich ist auch die Form eines Winkelsegments oder eine kubische Form. Vorzugsweise ist eine Magneteinheit oder ein Permanentmagnet viel kleiner und viel leichter als ein Magnetring. Vorzugsweise ist das Gewicht einer Magneteinheit kleiner als 1/5 oder 1/10 des Gewichts eines Magnetrings.

Wenn mehrere Magnetringe zusammen als eine der Magnetkomponenten eingesetzt werden, können die zusammen angeordneten Magnetringe insgesamt als eine gesamte Magnetringeinrichtung angesehen werden.

Vorzugsweise weist wenigstens eine Magnetkomponente wenigstens eine daran angeordnete Magneteinheit auf. Es ist möglich, dass wenigstens eine Magneteinheit an oder in wenigstens einer Eingriffskomponente direkt aufgenommen ist. Beispielsweise kann wenigstens eine Magneteinheit in eine Bohrung oder Öffnung in der Eingriffskomponente eingesetzt werden.

In vorteilhaften Weiterbildungen weist wenigstens eine Magnetkomponente wenigstens eine Trägereinheit und wenigstens eine daran aufgenommene Magneteinheit auf. Es ist bevorzugt, dass an einer Trägereinheit eine Mehrzahl von Magneteinheiten angeordnet und/oder aufgenommen werden kann. Besonders bevorzugt werden in eine Trägereinheit zwei oder mehr Magneteinheiten eingesetzt. Jede einzelne Magneteinheit kann aus einem oder mehreren Einzelmagneten bestehen. Die Axialverzahnung oder wenigstens eine Axialverzahnung kann an der zugehörigen Trägereinheit vorgesehen oder ausgebildet sein. Die Zahnscheibe wird dann vorzugsweise durch die Trägereinheit gebildet, an der eine Mehrzahl an Magneteinheiten aufnehmbar ist. Vorzugsweise ist die Zahnscheibe einstückig mit der Trägereinheit ausgebildet.

In bevorzugten Weiterbildungen weist die Trägereinheit eine Vielzahl von Aufnahmen auf, an denen eine Mehrzahl von Magneteinheiten aufnehmbar ist. Die Vielzahl der Aufnahmen kann der Mehrzahl der Magneteinheiten entsprechen. Dann ist an jeder Aufnahme eine Magneteinheit aufgenommen. Es ist aber auch möglich, dass die Anzahl der Aufnahmen größer ist als die Anzahl der Magneteinheiten. Dann ist es beispielsweise möglich, dass an jeder zweiten oder dritten Aufnahme eine Magneteinheit angeordnet ist, während die eine oder die beiden Aufnahmen dazwischen nicht mit einer Magneteinheit bestückt sind.

Besonders bevorzugt ist die Anzahl von Magneteinheiten veränderbar, um beispielsweise die wirksame Kraft anzupassen. Eine solche Ausgestaltung ermöglicht eine besonders flexible Einstellung des wirkenden Magnetfeldes und damit der wirkenden Vorbelastungskraft. Je nach gewünschter Feldstärke und je nach gewünschtem Anpressdruck kann eine entsprechende Anzahl von Magneteinheiten in den entsprechenden Aufnahmen positioniert werden. Eine solche Einstellung bzw. Justage der wirkenden Vorbelastungskraft kann sogar in einer Pause während einer Tour oder im Trainingslager erfolgen, in dem beispielsweise eine gewünschte Anzahl von Magneteinheiten aus den Aufnahmen entnommen wird oder darin eingesetzt wird. Die Nabe ist insbesondere werkzeuglos und vorzugsweise von Hand zerlegbar.

Eine unterschiedliche Anzahl an Magneteinheiten und/oder Magneteinrichtungen mit unterschiedlich starken Magneteinheiten bietet auch den Vorteil, dass je nach Anwendungsbereich unterschiedliche Bedingungen eingestellt oder vorgegeben werden können. So werden bei einem Mountainbike für einen schnellen Eingriff oft viele Zähne auf einer Zahnscheibe als Eingriffskomponente vorgesehen. Dann kann ein relativ starkes Magnetfeld mit gegebenenfalls vielen und/oder starken Magneteinheiten bevorzugt sein. Bei einem Rennrad hingegen werden oftmals Zahnscheiben als Eingriffskomponenten mit einer geringen Zähnezahl (z. B. 36 statt 72 und somit halb so viel) eingesetzt, die im Freilaufzustand weniger Reibung verursachen. Dort können nun weniger und/oder schwächere Magneteinheiten eingesetzt werden. Durch diese Weiterbildung der Erfindung kann ein unterschiedlich starkes Magnetfeld mit vernünftigem Aufwand realisiert werden.

Besonders bevorzugt ist die oder wenigstens eine Trägereinheit axial benachbart zu wenigstens einer Axialverzahnung angeordnet. Insbesondere sind die Magneteinheiten oder ist der Magnetring möglichst nahe an der Axialverzahnung vorgesehen, um eine effektive Kraftübertragung zu gewährleisten. Es ist bevorzugt, dass die Trägereinheit oder wenigstens eine Trägerreinheit aus einem leichten Material wie einem Leichtmetall, einem Kunststoff oder sogar einem leichten Kunststoff, einem Verbundwerkstoff oder aus einem Naturstoff besteht. Dadurch kann das Gewicht der Nabe unter Umständen erheblich reduziert werden, ohne die Funktion zu beeinträchtigen. Wenn die Axialverzahnung an der Trägerreinheit vorgesehen ist, besteht die Trägerreinheit vorzugsweise aus Stahl oder einem ähnlich festen Material.

Eine Trägereinheit kann beispielsweise als Trägerkäfig ausgebildet sein oder einen solchen umfassen. Möglich ist auch die Ausbildung als Magnetkäfig, an dem eine, zwei oder mehr Magneteinheiten angeordnet und/oder aufgenommen und/oder befestigt werden können.

Vorteilhafterweise weisen im Wesentlichen alle Magneteinheiten einer Magnetkomponente eine gleiche Ausrichtung der Magnetpole auf. Das bedeutet insbesondere, dass die Magneteinheiten einer Magnetkomponente vorzugsweise wenigstens teilweise parallel zueinander ausgerichtet sind, sodass die Nordpole der Magneteinheiten benachbart zueinander angeordnet sind, sowie es auch die Südpole der Magneteinheiten sind.

In allen Ausgestaltungen ist vorzugsweise wenigstens eine Eingriffskomponente als Zahnscheibe ausgeführt oder umfasst eine solche Zahnscheibe. Dann ist vorzugsweise an der Zahnscheibe wenigstens eine Magnetkomponente angeordnet. Die Zahnscheibe weist eine Axialverzahnung auf, die in der Eingriffsstellung in die andere Axialverzahnung eingreift.

In vorteilhaften Ausgestaltungen weist die Zahnscheibe einen umlaufenden Querschnitt auf, der im Wesentlichen L-förmig ausgebildet ist. Eine solche Ausgestaltung ermöglicht eine insgesamt leichte Nabe. Außerdem bietet sich der Vorteil, dass innerhalb der Zahnscheibe eine Magnetkomponente angeordnet werden kann, wodurch Bauraum eingespart werden kann. Möglich ist auch ein U-förmiger Querschnitt mit radial nach innen geöffnetem oder axial nach außen geöffnetem U, welches axial in entgegengesetzter Richtung zu der Axial- oder Stirnverzahnung ausgerichtet ist.

In allen Weiterbildungen und Ausgestaltungen sind vorzugsweise zwei Zahnscheiben als Eingriffskomponenten vorgesehen. Dabei sind beide Zahnscheiben insbesondere schwimmend an der Nabe aufgenommen. Vorzugsweise ist jede Zahnscheibe drehfest und axial verschiebbar aufgenommen. Dabei ist die eine Zahnscheibe drehfest und axial verschiebbar in dem Nabenkörper angeordnet, während die andere Zahnscheibe drehfest und axial verschiebbar in oder an der Antriebseinrichtung vorgesehen ist. Eine schwimmende Lagerung beider Zahnscheiben ermöglicht eine besonders flexible Anpassung der Lage der Zahnscheibe an eine jeweils aktuell vorliegende Situation. Dadurch kann jede Zahnscheibe sich winkelmäßig ausrichten. Zwei schwimmend aufgenommene Zahnscheiben tragen zur Erhöhung der Betriebssicherheit und erhöhen die Zuverlässigkeit.

Wenigstens eine Zahnscheibe kann in einem Haltering aufgenommen sein, der beispielsweise drehfest an dem Nabenkörper angeordnet ist. Möglich ist es auch, dass ein in seinen Abmessungen angepasster Haltering zur Aufnahme einer Zahnscheibe dient, wobei der Haltering an der Antriebseinrichtung vorgesehen ist. Ein Haltering kann ein Außengewinde aufweisen, um den Haltering in den Nabenkörper bzw. die Antriebseinrichtung einzuschrauben. Dann ist der Haltering als Gewindering ausgeführt. Der Haltering weist eine Innenkontur auf, die an eine Außenkontur der Zahnscheibe angepasst ist, um eine Zahnscheibe drehfest und axial verschiebbar aufzunehmen.

Vorzugsweise ist wenigstens eine Magneteinheit wenigstens teilweise in einer Aufnahme der Zahnscheibe angeordnet. Die Zahnscheibe kann dazu Ausnehmungen, Öffnungen oder Bohrungen aufweisen.

Die Magnetkomponenten einer Magneteinrichtung sind vorzugsweise so zueinander angeordnet, dass die Nordpole oder auch die Südpole benachbarter Magnetkomponenten einer Magneteinrichtung an der zueinander zugewandten Seite jeweils den gleichen Pol aufweisen. Dadurch wirkt die Magneteinrichtung als Vorbelastungseinheit, welche die beiden Magnetkomponente auseinander drückt. Da beide Magneteinrichtungen zu dem erforderlichen Hub beitragen, muss jede Magneteinrichtung nur etwa den halben insgesamt erforderlichen Hub zur Verfügung stellen.

Es ist möglich und bevorzugt, dass wenigstens eine Distanzhülse vorgesehen ist. Wenigstens eine Distanzhülse kann auch zur Aufnahme und Positionierung einer Magnetkomponente dienen.

Vorzugsweise ist wenigstens ein magnetischer Isolator vorgesehen. Auch der Einsatz magnetischer Leiter zur gezielten Formung des wirkenden Magnetfeldes ist bevorzugt. Solche magnetischen Isolatoren und/oder Leiter können zur effektiven Formung des Magnetfeldes sehr vorteilhaft sein.

In allen Ausgestaltungen ist es bevorzugt, dass die Zähne der Axialverzahnungen eine solche Zahnform mit einer insbesondere negativen Zahnflanke aufweisen, sodass sich die Zahnscheiben bei beginnendem Eingriff auch wenigstens teilweise von selbst zusammenziehen.

Vorzugsweise ist es möglich, dass wenigstens eine Eingriffskomponente als Magneteinrichtung ausgebildet ist oder dass wenigstens eine Magneteinrichtung als Eingriffskomponente ausgebildet ist.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Fig. 1: einen schematischen Querschnitt durch eine erfindungsgemäße Nabe;
- Fig. 2: das Detail Z aus Figur 1 in vergrößerter Darstellung;
- Fig. 3: den Schnitt B-B aus Figur 1;
- Fig. 4: eine Explosionsdarstellung der Mehrzahl der Teile der erfindungsgemäßen Nabe;
- Fig. 5: die Zahnscheiben der Freilaufeinrichtung in einer ersten Ausführungsform in vergrößerter Darstellung;
- Fig. 6: eine Zahnscheibe einer anderen Ausführungsform;
- Fig. 7: eine schematische Seitenansicht einer Trägereinheit; und
- Fig. 8: eine stark schematische Darstellung der Pole einer Magneteinrichtung.

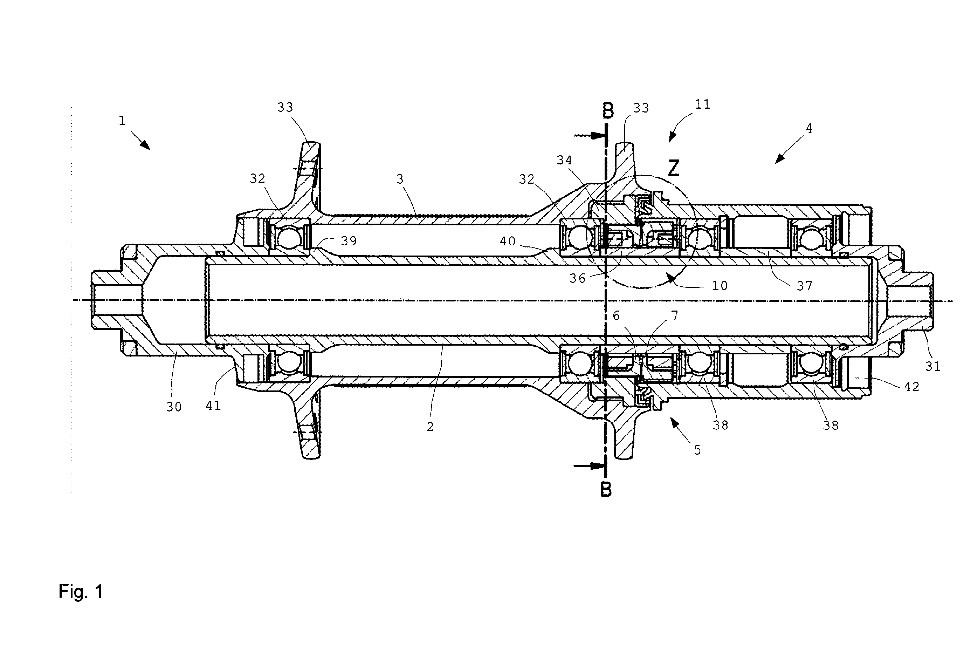

Figur 1 zeigt eine Nabe 1, die als Hinterradnabe ausgeführt ist und für den Einsatz an wenigstens teilweise muskelbetriebenen Fahrzeugen und insbesondere Zweirädern wie Fahrrädern geeignet ist.

Die Nabe verfügt über eine feststehende Achse 2. Der Nabenkörper 3 ist über Lager 32 gegenüber der feststehenden Achse 2 drehbar aufgenommen. An dem Nabenkörper 3 sind Speichenflansche 33 zur Befestigung von Speichen vorgesehen.

Die Antriebseinrichtung 4 ist hier als Rotor ausgeführt. An der Antriebseinrichtung kann ein Ritzel oder aber ein Ritzelsatz angeordnet werden, um die Antriebskraft auf die Nabe zu übertragen. Die Antriebseinrichtung 4 könnte aber auch einstückig mit einem Ritzel oder einem Ritzelsatz ausgebildet sein. Zur Lagerung der Antriebseinrichtung 4 gegenüber der feststehenden Achse 2 sind Lager 38 vorgesehen.

Zwischen der Antriebseinrichtung 4 und dem Nabenkörper 3 ist eine Freilaufeinrichtung 5 vorgesehen, die eine Relativbewegung des Nabengehäuses zu der Antriebseinrichtung 4 erlaubt.

Die Freilaufeinrichtung 5 umfasst hier eine erste Eingriffskomponente 6 und eine zweite Eingriffskomponente 7. Dabei sind beide Eingriffskomponenten 6 und 7 als Zahnscheiben 20 und 21 ausgebildet. Die als Zahnscheibe 20 ausgebildete Eingriffskomponente 6 ist drehfest aber axial verschiebbar in dem Gewindering 34 aufgenommen. Der Nabenkörper 3 besteht vorzugsweise aus einem Leichtmetall und kann einteilig oder mehrteilig ausgebildet sein. Der in dem Nabengehäuse befestigte Gewindering 34 kann auch aus einem Leichtmetall wie Aluminium bestehen und eine Oberflächenbeschichtung aufweisen. Der Gewindering 34 kann auch aus einem festeren Material wie z. B. Stahl bestehen.

Die oder wenigstens eine Zahnscheibe 20, 21 kann wenigstens teilweise aus einem magnetischen Material bestehen. Wenigstens teilweise kann die Zahnscheibe aus NiCr21Mo bestehen oder dieses Material umfassen. Möglich ist auch ein anderes magnetisches Material, welches z. B. mit einer Härtung versehen oder hartbeschichtet wird.

Die Freilaufeinrichtung 5 mit den Eingriffskomponenten 6 und 7 wird durch eine magnetische Vorbelastungseinrichtung 10 in die Eingriffsstellung 11 vorbelastet, die in Figur 1 dargestellt ist.

An den Enden der feststehenden Achse 2 sind Adapterringe 30 und 31 als Endstücke vorgesehen. Die Endstücke 30 und 31 verfügen über Dichtungen 41 und 42, um das Innere der Nabe 1 vor Staub, Schmutz und Feuchtigkeit zu schützen.

Beim Einbau werden die Adapterringe 30 und 31 in die Ausfallenden beispielsweise eines Fahrrades eingeführt. Im Anschluss wird die Nabe an den Endstücken 30 und 31 mit einem Schnellspanner zwischen den Ausfallenden geklemmt. Der Kraftfluss erstreckt sich dabei von dem Adapterring 30 über die innere Lagerschale des Lagers 32 und wird über den Absatz 39 an der feststehenden Achse 2 durch die Achse 2 bis zum Absatz 40 übertragen. Dort wird die Kraft über den Innenring des Lagers 32 weiter auf die Distanzhülse 36 übertragen. Von der Distanzhülse 36 wird die Kraft über den Innenring des Lagers 38 auf die Distanzhülse 37 übertragen. Von dort wird die Kraft über den Innenring des Lagers 38 auf den Adapterring 31 und schließlich auf das andere Ausfallende übertragen. Dadurch ergibt sich eine definierte und kraftschlüssige Aufnahme der Nabe an den Ausfallenden eines Fahrrads.

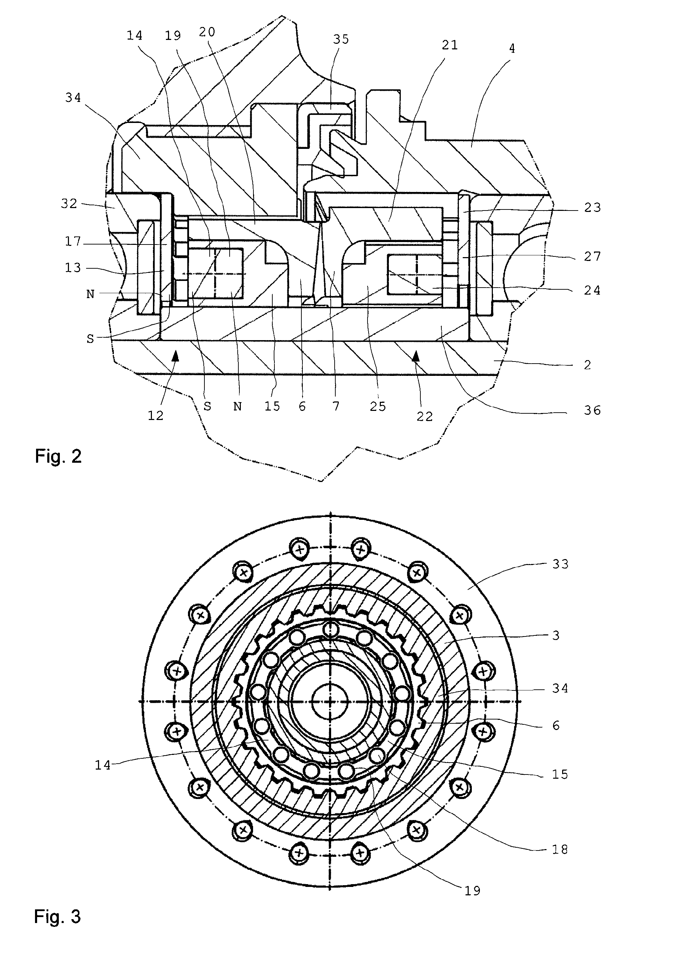

Figur 2 zeigt das Detail Z aus Figur 1 in einer vergrößerten Darstellung. Auf der feststehenden Achse 2 ist das Lager 32 zur Lagerung des Nabenkörpers 3 vorgesehen. In den Nabenkörper 3 ist der Gewindering 34 eingeschraubt. Zwischen dem Nabenkörper 3 und der Antriebseinrichtung 4 ist die Freilaufeinrichtung 5 mit den Eingriffskomponenten 6 und 7 vorgesehen. Eine Dichteinrichtung 35 zwischen dem Nabenkörper 3 und der Antriebseinrichtung 4 schützt das Innere der Nabe 1 vor Staub und Schmutz.

Die beiden als Zahnscheiben 20 und 21 ausgeführten Eingriffskomponenten 6 und 7 weisen hier im Querschnitt eine etwa L-förmige Struktur auf, sodass im Inneren der Zahnscheiben 20, 21 weitere Komponenten angeordnet werden können.

In der Zahnscheibe 20 ist die Magnetkomponente 14 angeordnet, die hier eine Trägereinheit 15 mit darin vorgesehenen Aufnahmen 19 umfasst. Seitlich ist axial weiter außen die Magnetkomponente 13 vorgesehen, die hier als Magnetscheibe 17 ausgebildet ist und sich um die feststehende Achse und die darauf angeordnete Distanzhülse 36 herum erstreckt. Die Distanzhülse 36 kann auch zur definierten Positionierung der Magnetkomponente 13 dienen. Dadurch werden reproduzierbare Verhältnisse hergestellt.

Die Magneteinrichtung 22 umfasst die hier auch als Magnetscheibe 27 ausgebildete Magnetkomponente 23 und die im Inneren der Zahnscheibe 21 aufgenommene Magnetkomponente 24. Hier ist im Inneren der Zahnscheibe 21 sowie auch im Inneren der Zahnscheibe 20 jeweils eine Trägereinheit 15, 25 vorgesehen, die eine Vielzahl an Öffnungen oder Bohrungen aufweist. Die Zahnscheiben 21 und 22 können auch einstückig mit den Trägereinheiten 15, 25 gebildet sein. Die Magnetkomponenten 13 und 23 können auch eine axiale Begrenzung des Hubes der Magneteinrichtungen 12 und 22 bewirken.

Jede Magneteinrichtung 12, 22 muss nur etwa die Hälfte des gesamten Hubes zur Verfügung stellen, sodass sich die Abstände zwischen den Magnetkomponenten 13 und 14 bzw. 23 und 24 im Betrieb nur um den halben Hub ändern. Dadurch können die wirkenden Magnetkräfte relativ gleich gelassen werden, was zu einem homogenen Ansprechverhalten führt.

Figur 3 zeigt den Querschnitt B-B aus Figur 1. Der äußerste Kreis zeigt den Speichenflansch 33 der Nabe 1. Radial nach innen hin erstreckt sich der Nabenkörper 3, in den ein Gewindering 34 als Haltering eingeschraubt ist.

Im Inneren der Zahnscheibe 20 wiederum ist eine Trägereinheit 15 vorgesehen oder als eine solche ausgebildet und kann verfügt über eine Vielzahl von Aufnahmen 19. In einigen oder allen der Aufnahmen 19 kann eine Magneteinheit 18 vorgesehen sein. Über die Anzahl der Magneteinheiten 18 kann die Stärke des Magnetfeldes variiert werden.

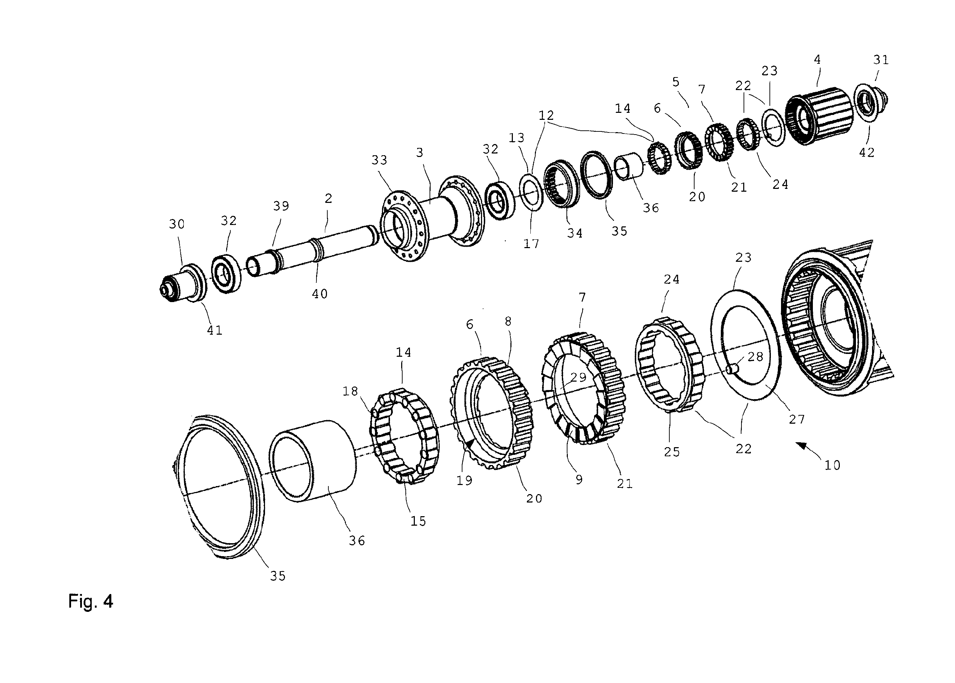

Figur 4 zeigt eine schematische Explosionsdarstellung der Nabe 1. Im oberen Teil ist die gesamte Nabe und im unteren Teil der Bereich des Freilaufes vergrößert dargestellt. An den beiden Enden sind die Endstücke 30 und 31 mit den Dichtungen 41 und 42 zu erkennen. An das Endstück 30 schließt sich das Lager 32 zur Lagerung der Achse 2 an. Die Achse 2 weist Absätze 39 und 40 auf, um die auftretenden Kräfte weiter zu leiten. Rechts neben dem Nabenkörper 3 ist das Lager 32 abgebildet. Daran schließt sich die Magnetkomponente 13 an, die hier als Magnetscheibe 17 ausgeführt ist. Der Gewindering 34 ist im montierten Zustand in den Nabenkörper 3 eingeschraubt. Die Dichtung 35 dient zur Abdichtung zwischen Nabenkörper 3 und Antriebseinheit 4. Die Distanzhülse 36 sichert die Magnetscheibe 17 in axialer Richtung. Die Magnetkomponente 14 bildet zusammen mit der Magnetkomponente 13 die erste Magneteinrichtung 12. Die zweite Magneteinrichtung 22 wird durch die Magnetkomponenten 23 und 24 gebildet.

Bei der Montage wird die Trägereinheit 15 mit den darin aufgenommenen Magneteinheiten 18 in das Innere der Zahnscheibe 20 eingesetzt.

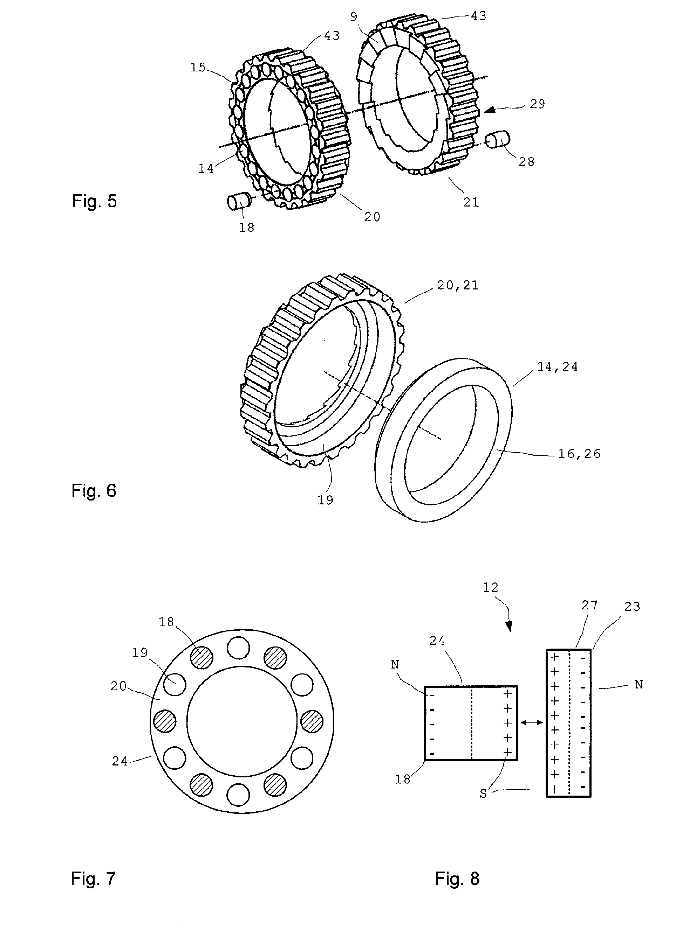

Figur 5 zeigt in einer vergrößerten Darstellung die Zahnscheiben 20 und 21. Dabei weist die Zahnscheibe 20 in dem Aufnahmeraum 19 eine einstückig mit der Zahnscheibe 20 ausgebildete Trägereinheit 15 oder eine separat vorgesehene und eingeschobene Trägereinheit auf, die über eine Vielzahl von Aufnahmen 19 zur Aufnahme von Magneteinheiten 18 dient. Bei der Zahnscheibe 21 kann in analogerweise eine Trägereinheit 25 aufgenommen oder einstückig ausgebildet sein, die über Aufnahmen 29 verfügt, in die Magneteinheiten 28 eingesetzt werden können. Die Zahnscheiben verfügen über radial Verzahnungen 43 auf dem äußeren Umfang.

Figur 6 zeigt eine andere Ausgestaltung von Zahnscheiben 20, 21, wobei hier in die Aufnahme 19 keine Trägereinheit 15 eingesetzt oder vorgesehen wird, sondern ein Magnetring 16 bzw. 26 als Magnetkomponente 14 bzw. 24. Ein grundsätzlicher Vorteil bei dem Einsatz von zwei schwimmend gelagerten Zahnscheiben ist, dass der Eingriff besser ist, als wenn sich nur ein Teil bzw, eine Zahnscheibe bewegt.

Figur 7 zeigt eine schematische Darstellung einer hier separaten Trägereinheit 15 mit daran vorgesehenen Aufnahmen 19. In der schematischen Darstellung gemäß Figur 7 ist jede zweite Aufnahme mit einer Magneteinheit 18 versehen, die hier schraffiert dargestellt sind. Durch eine Anpassung der Anzahl der Magneteinheiten 18 kann grundsätzlich eine beliebige Kraft als Vorbelastungskraft der Eingriffskomponenten 6 und 7 aufeinander zu vorgegeben und eingestellt werden. Genauso kann auch eine in die Zahnscheibe integrierte Trägereinheit 15, 25 vorgesehen sein. Diese weist dann die Axialverzahnung und insbesondere auch die Außenverzahnung auf.

Figur 8 zeigt in einer schematischen Darstellung die Magneteinrichtung 12 mit den Magnetkomponenten 23 und 24. In der hier dargestellten Variante liegen die Südpole S "+" benachbart zueinander und stoßen sich voneinander ab. Da zwei Magneteinrichtungen vorgesehen sind, muss jede nur einen geringen Hub zur Verfügung stellen, was Kräftevariationen im Betrieb erheblich reduziert und eine bessere und gezieltere Einstellung der Kräfte ermöglicht.

In allen Fällen sind die beiden Axialverzahnungen 8, 9 relativ zueinander axial beweglich angeordnet. Die Axialverzahnung 8 ist integral an der Zahnscheibe 20 als Eingriffskomponente 7 vorgesehen und die Axialverzahnung 9 ist integraler Bestandteil der Zahnscheibe 21 als Eingriffskomponente 7.

Die erfindungsgemäße Nabe 1 erlaubt eine optimale Anpassung der Eigenschaften des Freilaufs an die vorliegenden Bedingungen. Über eine angepasste Anzahl an Magneteinheiten 18, 28 und/oder Magnetkomponenten 13, 14 und/oder Materialien kann eine optimale Anpresskraft und auch eine günstige Verteilung der Anpresskraft erzielt werden. Der Aufwand dafür ist gering. So kann der Freilauf an den Typ des Fahrrads und auch an das aktuelle Fahrrad angepasst werden. Auch eine Anpassung an die vorgesehenen Streckenbedingungen ist auf einfache Art und Weise möglich. Die im Freilaufzustand wirkende Reibung kann verringert werden, sodass die Geräusche und der Verschleiß reduziert werden können. Insgesamt stellt die erfindungsgemäße Nabe eine vorteilhafte Ausgestaltung zur Verfügung, bei der durch den Einsatz von zwei Magneteinrichtungen eine homogenere Kraftverteilung ermöglicht wird, dadurch kann die wirkende Eingriffskraft sowohl in der Eingriffsstellung als auch in der Freilaufstellung genauer auf die gewünschten Ergebnisse eingestellt werden.

**Bezugszeichenliste:**

| | | | |
|---|---|---|---|
| 1 | Nabe | 24 | Magnetkomponente |
| 2 | Nabenachse | 25 | Trägereinheit |
| 3 | Nabenkörper | 26 | Magnetring |
| 4 | Antriebseinrichtung | 27 | Magnetscheibe |
| 5 | Freilaufeinrichtung | 28 | Magneteinheit |
| 6 | Eingriffskomponente | 29 | Aufnahme |
| 7 | Eingriffskomponente | 30 | Adapterring |
| 8 | Axialverzahnung | 31 | Adapterring |
| 9 | Axialverzahnung | 32 | Lager |
| 10 | Vorbelastungseinrichtung | 33 | Speichenflansch |
| 11 | Eingriffsstellung | 34 | Gewindering |
| 12 | erste Magneteinrichtung | 35 | Dichteinrichtung |
| 13 | Magnetkomponente | 36 | Distanzhülse |
| 14 | Magnetkomponente | 37 | Distanzhülse |
| 15 | Trägereinheit | 38 | Lager |
| 16 | Magnetring | 39 | Absatz |
| 17 | Magnetscheibe | 40 | Absatz |
| 18 | Magneteinheit | 41 | Dichtung |
| 19 | Aufnahme | 42 | Dichtung |
| 20 | Zahnscheibe | 43 | Außenverzahnung |
| 21 | Zahnscheibe | S | Südpol |
| 22 | zweite Magneteinrichtung | N | Nordpol |
| 23 | Magnetkomponente | | |

## Patentansprüche

1. Nabe (1) für wenigstens teilweise muskelbetriebene Fahrzeuge und insbesondere Zweiräder mit einer Nabenachse (2), einem Nabenkörper (3), einer rotierbaren Antriebseinrichtung (4) und mit einer Freilaufeinrichtung (5),
wobei die Freilaufeinrichtung (5) eine erste und eine zweite miteinander zusammenwirkende Eingriffskomponente (6, 7) mit jeweils wenigstens einer Axialverzahnung (8, 9) aufweist, wobei die Freilaufeinrichtung (5) über eine magnetische Vorbelastungseinrichtung (10) in eine Eingriffsstellung (11) vorbelastet wird,
wobei eine erste Magneteinrichtung (12) die erste Eingriffskomponente (6) und eine zweite Magneteinrichtung (22) die zweite Eingriffskomponente (7) in die Eingriffsstellung (11) vorbelasten,
**dadurch gekennzeichnet,**
**dass** sowohl die erste Magneteinrichtung als auch die zweite Magneteinrichtung jeweils zwei sich abstoßende Magnetkomponenten umfassen, und dass wenigstens eine Magnetkomponente (14, 24) wenigstens eine Trägereinheit (15, 25) und eine Mehrzahl daran angeordneter Magneteinheiten (18, 28) aufweist.

2. Nabe (1) nach Anspruch 1, wobei wenigstens eine Magnetkomponente (14, 24) einen Magnetring (16, 26) umfasst.

3. Nabe (1) nach wenigstens einem der vorhergehenden Ansprüche, wobei die Trägereinheit (15, 25) eine Vielzahl von Aufnahmen (19, 29) aufweist, an denen eine Mehrzahl von Magneteinheiten (18, 28) aufgenommen ist und/oder wobei die Anzahl der Magneteinheiten veränderbar ist.

4. Nabe (1) nach wenigstens einem der vorhergehenden Ansprüche, wobei die Trägereinheit (15, 25) axial benachbart zu der Axialverzahnung (8, 9) angeordnet ist und/oder wobei die Axialverzahnung (8, 9) an der Trägereinheit (15, 25) vorgesehen oder ausgebildet ist.

5. Nabe (1) nach wenigstens einem der vorhergehenden Ansprüche, wobei die Trägereinheit (15, 25) aus einem leichten Material wie einem Leichtmetall oder einem leichten Kunststoff oder Naturstoff besteht.

6. Nabe (1) nach wenigstens einem der vorhergehenden Ansprüche, wobei im Wesentlichen alle Magneteinheiten (18, 28) einer Magnetkomponente (14, 24) eine gleiche Polausrichtung aufweisen.

7. Nabe (1) nach wenigstens einem der vorhergehenden Ansprüche, wobei wenigstens eine Eingriffskomponente (6, 7) eine Zahnscheibe (20, 21) umfasst, an der eine Magnetkomponente (14, 24) angeordnet ist und/oder wobei zwei Zahnscheiben (20, 21) als Eingriffskomponenten (6, 7) vorgesehen sind und wobei beide Zahnscheiben (20, 21) insbesondere schwimmend aufgenommen sind.

8. Nabe (1) nach wenigstens einem der vorhergehenden Ansprüche, wobei die Zahnscheibe (20, 21) einen umlaufenden und im Wesentlichen L-förmigen Querschnitt aufweist.

9. Nabe (1) nach wenigstens einem der vorhergehenden Ansprüche, wobei eine Zahnscheibe (20) der beiden Zahnscheiben drehfest und axial beweglich in dem Nabenkörper (3) und die andere Zahnscheibe (21) drehfest und axial beweglich an der Antriebseinrichtung (4) angeordnet ist.

10. Nabe (1) nach wenigstens einem der vorhergehenden Ansprüche, wobei wenigstens eine Zahnscheibe (20, 21) in einem Haltering (34) aufgenommen ist, der drehfest an dem Nabenkörper (3) angeordnet ist.

11. Nabe (1) nach wenigstens einem der vorhergehenden Ansprüche, wobei wenigstens eine Magneteinheit (18, 28) wenigstens teilweise in einer Aufnahme (19) der Zahnscheibe (20, 21) angeordnet ist.

12. Nabe (1) nach wenigstens einem der vorhergehenden Ansprüche, wobei wenigstens eine Distanzhülse vorgesehen ist.

13. Nabe (1) nach wenigstens einem der vorhergehenden Ansprüche, wobei wenigstens eine Eingriffskomponente (6, 7) als Magneteinrichtung (12, 22) ausgebildet ist.

## Claims

1. Hub (1) for at least partially muscle-powered vehicles and in particular two-wheeled vehicles, having a hub axle (2), a hub body (3), a rotatable driving device (4), and having a freewheel device (5),
wherein the freewheel device (5) comprises a first and a second engagement component (6, 7) cooperating with one another having at least one axial toothing (8, 9) each, wherein the freewheel device (5) is biased to an engaging position (11) via a magnetic biasing device (10),
wherein a first magnetic device (12) biases the first engagement component (6) and a second magnetic device (22) biases the second engagement component (7) to the engaging position (11), **characterized in**
**that** both the first magnetic device and the second magnetic device comprise a pair of mutually repelling magnetic components each, and that at least one magnetic component (14, 24) comprises at least one carrier unit (15, 25) and a multitude of magnetic units (18, 28) disposed thereat.

2. The hub (1) according to claim 1 wherein at least one magnetic component (14, 24) comprises a magnetic ring (16, 26).

3. The hub (1) according to at least one of the preceding claims wherein the carrier unit (15, 25) comprises a plurality of accommodations (19, 29) in which a multitude of magnetic units (18, 28) is received and/or wherein the number of magnetic units is variable.

4. The hub (1) according to at least one of the preceding claims wherein the carrier unit (15, 25) is disposed axially adjacent to the axial toothing (8, 9) and/or wherein the axial toothing (8, 9) is provided or configured at the carrier unit (15, 25).

5. The hub (1) according to at least one of the preceding claims wherein the carrier unit (15, 25) consists of a lightweight material such as a light metal or a lightweight plastic or a natural material.

6. The hub (1) according to at least one of the preceding claims wherein substantially all of the magnetic units (18, 28) of a magnetic component (14, 24) show the same pole orientation.

7. The hub (1) according to at least one of the preceding claims wherein at least one engagement component (6, 7) comprises a toothed disk (20, 21) at which a magnetic component (14, 24) is disposed and/or wherein two toothed disks (20, 21) are provided as engagement components (6, 7) and wherein both of the toothed disks (20, 21) are received in particular floating.

8. The hub (1) according to at least one of the preceding claims wherein the toothed disk (20, 21) has a circumferential and substantially L-shaped cross section.

9. The hub (1) according to at least one of the preceding claims wherein one toothed disk (20) of the two toothed disks is disposed non-rotatably and axially movably in the hub body (3) and the other toothed disk (21) is disposed non-rotatably and axially movably at the driving device (4).

10. The hub (1) according to at least one of the preceding claims wherein at least one toothed disk (20, 21) is received in a retaining ring (34) which is non-rotatably disposed at the hub body (3).

11. The hub (1) according to at least one of the preceding claims wherein at least one magnetic unit (18, 28) is at least partially disposed in an accommodation (19) of the toothed disk (20, 21).

12. The hub (1) according to at least one of the preceding claims wherein at least one spacer sleeve is provided.

13. The hub (1) according to at least one of the preceding claims wherein at least one engagement component (6, 7) is configured as a magnetic device (12, 22).

## Revendications

1. Moyeu (1) pour véhicules entraînés au moins partiellement par force musculaire et notamment pour deux roues, avec un axe de moyeu (2), un corps de moyeu (3), un dispositif d'entraînement rotatif (4) et un dispositif de roue libre (5),
le dispositif de roue libre (5) présentant une première et une deuxième composante d'engrènement (6, 7) fonctionnant en coopération l'une avec l'autre, avec chacune au moins un engrenage axial (8, 9), une précharge étant appliquée au dispositif de roue libre (5) dans une position d'engrenage (11) par le biais d'un dispositif de préchargement magnétique (10), un premier dispositif magnétique (12) appliquant une précharge à la première composante d'engrènement (6) et un deuxième dispositif magnétique (22) appliquant une précharge à la deuxième composante d'engrènement (7) dans la position d'engrenage (11),
**caractérisé en ce**
**qu'**aussi bien le premier dispositif magnétique que le deuxième dispositif magnétique comprennent chacun deux composantes magnétiques se repoussant, et qu'en ce qu'au moins une composante magnétique (14, 24) présente au moins une unité de support (15, 25) et plusieurs unités magnétiques (18, 28) agencées sur celle-ci.

2. Moyeu (1) selon la revendication 1, au moins une composante magnétique (14, 24) comprenant un anneau magnétique (16, 26).

3. Moyeu (1) selon au moins l'une quelconque des revendications précédentes, l'unité de support (15, 25) présentant une pluralité de réceptions (19, 29), sur lesquelles sont montées plusieurs unités magnétiques (18, 28) et/ou le nombre d'unités magnétiques étant variable.

4. Moyeu (1) selon au moins l'une quelconque des revendications précédentes, l'unité de support (15, 25) étant agencée à proximité de l'axe de l'engrenage axial (8, 9) et/ou l'engrenage axial (8, 9) étant prévu ou conçu sur l'unité de support (15, 25).

5. Moyeu (1) selon au moins l'une quelconque des revendications précédentes, l'unité de support (15, 25) étant constituée d'un matériau léger tel qu'un métal léger ou une matière plastique ou un produit naturel légers.

6. Moyeu (1) selon au moins l'une quelconque des revendications précédentes, sensiblement toutes les unités magnétiques (18, 28) d'une composante magnétique (14, 24) présentant une même orientation de pôle.

7. Moyeu (1) selon au moins l'une quelconque des revendications précédentes, au moins une composante d'engrènement (6, 7) comprenant une rondelle crantée (20, 21) sur laquelle est agencée une composante magnétique (14, 24) et/ou deux rondelles crantées (20, 21) étant prévues en tant que composantes d'engrènement (6, 7), et les deux rondelles crantées (20, 21) étant notamment à montage flottant.

8. Moyeu (1) selon au moins l'une quelconque des revendications précédentes, la rondelle crantée (20, 21) présentant une section circonférentielle et sensiblement en forme de L.

9. Moyeu (1) selon au moins l'une quelconque des revendications précédentes, une rondelle crantée (20) des deux rondelles crantées étant disposée raide en torsion et mobile axialement dans le corps de moyeu (3), et l'autre rondelle crantée (21) raide en torsion et mobile axialement sur le dispositif d'entraînement (4).

10. Moyeu (1) selon au moins l'une quelconque des revendications précédentes, au moins une rondelle crantée (20, 21) étant montée dans une bague de maintien (34) qui est agencée raide en torsion sur le corps de moyeu (3).

11. Moyeu (1) selon au moins l'une quelconque des revendications précédentes, au moins une unité magnétique (18, 28) étant disposée au moins partiellement dans une réception (19) de la rondelle crantée (20, 21).

12. Moyeu (1) selon au moins l'une quelconque des revendications précédentes, au moins une douille d'écartement étant prévue.

13. Moyeu (1) selon au moins l'une quelconque des revendications précédentes, au moins une composante d'engrènement (6, 7) étant conçue en tant qu'unité magnétique (12, 22).
